# EUROPEAN PATENT APPLICATION

(11) **EP 2 333 603 A1**
(43) Date of publication of application: **15.06.2011**
(21) Application number: 09306192.7
(22) Date of filing: 08.12.2009
(51) Int. Cl.: G02B 26/10, G02B 26/08, H04N 1/04

(54) **An optical beam scanner**

(71) Applicant: Alcatel Lucent, 75008 Paris (FR)
(72) Inventor: Ryf, Roland, Aberdeen, NJ 07747 (US); Pardo, Flavio, New Providence, NJ 07974 (US); Aksyuk, Vladimir, Gaithersburg, MD 20878 (US)
(74) Representative: Shamsaei Far, Hassan

(57) **Abstract**

A beam scanner comprising at least one array (20) of a plurality micromirrors (30) and a method of scanning beams. The array is installed on a substrate (21). At least some of the plurality of micromirrors in the array are configured to be moved away and rotated with respect to the substrate.

## Description

The present invention relates to an optical beam scanner wherein the optical beam may comprise any coherent or partially coherent light source, such as laser.

### BACKGROUND ART

Optical beam scanners are known due their use in various applications. One well-known application is in scanning products that are for sale in sales points such as in shops and supermarkets where the product typically carries a bar code and is passed in front of a laser beam scanner and the scanner reads the bar code. By reading the bar code, the product is identified and thereby its sale is registered by a cash register coupled to the scanner. These scanners use mirrors that tilt to the sides as they reflect a laser beam toward the object to be scanned, typically being the product to be sold. The light beam scans over the bar codes and is reflected back to a beam detector inside the scanner which converts the intensity of the light (low where the beam has been reflected from the black bars and high where the beam is reflected from blank spaces). In this manner the bar code is read upon receipt and processing of the reflected light.

in scanners, the speed at which the mirrors move has certain relationship with the resolution and/or detection capabilities of the scanner. Typically, scanning at higher resolutions or with faster detection capabilities would require mirrors capable of moving at higher speeds. Examples of such high resolution, fast detection applications are laser projection, real-time scene scanning (such as target recognition applications) and reference beam generation for holographic storage systems. In hologram storage applications, a light beam containing the page with information to be stored is made to interfere with a reference light beam produced by the scanner thereby forming a three dimensional light pattern that is stored in a photosensitive material. In order to reproduce the page the holographic material is typically illuminated with the corresponding reference beam. In such holographic applications, the time to change the angle in order to get to the next reference beam from the scanner is closely related to page transfer rates. In addition to speed, the beam scanner is required to have good wave-front quality and high resolution in order to find and readout high signal-to-noise ratio (SNR) holograms.

One currently known solution towards improving resolution and quality is the use of a galvanornetric scanner technology. In this technology, the mirrors are made to move by a magnetic field caused by an electric current. However, the speed provided by this technology is relatively limited, making it not suitable for other applications requiring fast movement of mirrors.

As the tendency in recent applications requires the use of mirrors of smaller size, a solution is known to fabricate scanners using integrated circuit micro-fabrication techniques such as MEMS (Micro Electro-Mechanical-Systems). However, there are also limitations in what these solutions are capable of providing. Single mirrors supporting beam sizes in the range of 1-2mm are at the upper limit of what typically is achieved with MEMS technology, although with significant degradation in wave-front quality and high-speed. Furthermore, a large motion in the device is typically available when the device is mechanically at resonance. Some still faster solutions are also known such as Fast All-Optical Routing applications using MEMS mirrors, for example in an all-optical routing device comprising microscopic mirrors, each able to tilt in various directions, to steer light. The micromirrors route information in the form of photons, or light pulses, between a plurality of fibers. These devices may have a size as small as about 1 mm. However, there are certain limitations in their speed which may reach about 200-500Hz, with corresponding impacts on the restoration/switching speed. One example of such devices is disclosed in "Lucent Microstar™ Micromirror Array Technology for Large Optical Crossconnects". V.A. Aksyuk, et al. Proceedings of MOEMS and Miniaturized Systems, Santa Clara, California. SPIE vol. 4178, pg. 320; 2001.

### SUMMARY

Some embodiments of the invention feature a beam scanner using an array of micromirrors capable of performing piston and tilt (and or tilt) movements as will be described in further detail below. In this manner, the large mirror as used in conventional solutions is replaced by the array of small micromirrors. In a preferred embodiment, the micromirrors are arranged in micro-slats as will be described in further detail below.

In the context of the present description, the term tip is used to refer to an action that causes a plane defined by X and Y axes to rotate around one axis, for example, X, whereas the term tilt is used to refer to an action that causes the plane to rotate round the other axis, for example Y.

Furthermore, herein the term mirror is to be understood to include any object (metal, metal coated, or coated with any non-metal light reflective material) capable of reflecting an incident light.

In order to improve speed, a beam scanner based on a single MEMS mirror may comply with the severe requirements of high speed and good resolution required, for example in a holographic storage applications. The MEMS mirror may typically have a diameter of about 1.5mm, fast frame rate with an angular deflection of about 10 KHz and ± 7.5 degrees (typically being considered large), high resolution (2 mdeg) and very good stability and optical quality (for example a peak to valley roughness of the reflecting surface of about λ/10, modulation level of about less than 5%, and a reflectivity above about 85% where It is the wavelength of the incident light. One of the main limitations in the performance of a single mirror with these specifications is the presence of dynamic deformations that typically occur when operated at high speed and large angles. In this case, the mirror plate deformation distorts the phase front of the reflected beam causing unwanted effects, for example in the creation of holograms.

Dynamic deformation can be reduced by increasing the thickness t of the mirror, however this increases the mirror's moment of inertia I ∝ L⁴•t, where L is a mirror characteristic size such as length and/or width. Herein the sign ∝ is used to show proportionality.

Driving the mirror to oscillate efficiently at a given rate implies that its natural frequency must be equal to or greater than the oscillation rate. The natural frequency for a rotating body fulfils the following proportionality: F ∝ (K/I)^{1/2}, where I is the moment of inertia and K is the restoring spring constant supporting it, hence the spring must have sufficiently high stiffness. The high spring stiffness increases the required actuation moment M=K•θ, where M is the actuation moment and θ the rotation angle. The electrostatic actuation moment fulfils the following proportionality M ∝ ∂C/∂θ•V² where ∂C/∂θ is the capacitance derivative fulfilling the proportionality ∂C/∂θ ∝ 1/θ and V is the voltage applied between the mirror and the substrate. Combining these expressions we see that V cc (L⁴•t•θ³•F²)^{1/2} which represent the complexity and the challenge involved in scaling existing electro-statically actuated micromirrors.

Considering for example an optimized router with mirrors as referred to above, with an intention of extending such a design for a Holographic Data Storage (HDS) scanner, it will result in substantial increase in driving voltages to impractical values, typically of the order of kilovolts even before considering a thicker mirror.

Another known solution is the use of high-capacitance comb-drive actuators which may improve the situation with respect to the above example, but still may not be able to fully compensate the substantial increase required in the driving voltages.

Other known actuation mechanisms are also possible, such as those of electromagnetic driving force, but in such cases the limitations are typically in implementing powerful magnets in the packaging and electrical dissipation in the coil.

Some relief in the amount of the forces required to achieve a desirable deflection may be obtained by designing the mirror in such a manner as to oscillate at its resonance frequency. To effectively make use of this idea, the mirror must resonate with minimal frictional losses from air (that serves as a damping force), thus requiring the mirror to be packaged in vacuum. In this situation however the mirror may not be operated for random angle access, but it may perform a periodic harmonic angle scan, which is undesirable for random memory readout. Independently of the driving approach, there are other limitations for large, fast micromachined scanners. One example of such limitations is the mechanical clearance: for example a tilt range of 7.5° mechanical would typically need about 100µm clearance. However, most surface micromachining processes typically cannot accommodate more than 10µm, unless multi-wafer approaches are used. Static deformations are also important for mirror sizes in such size ranges, mainly due to limitations in control of stress gradients and stress mismatches between the different materials that make the reflector.

Accordingly in some embodiments of the invention there is provided a beam scanner comprising at least one array of a plurality of micromirrors, said array being installed on a substrate wherein at least some of the plurality of micromirrors in said array are configured to be moved away and rotated with respect to the substrate.

According to some specific embodiments, a micromirror is configured to move away with respect to the substrate by a rectilinear or in a curvilinear movement. According to some specific embodiments the rotation of a micromirror is around a first axis or around a first axis and a second axis.

According to some specific embodiments all or some of the micromirrors rotate at the same angle.

According to some specific embodiments all or some of the micromirrors piston in an amount which differs from an amount of a piston of at least one other micromirror by an amount fulfilling the condition Δd =Nλ/2, where λ is the wavelength of a light beam used for scanning, and N is an integer number. According to some specific embodiments a plurality of micromirrors are configured to piston in the same amount.

Some embodiments of the invention feature a micromirror array chip comprising the beam scanner as set forth herein.

Some embodiments of the invention feature an optical device comprising the micromirror array chip or the beam scanner as set forth herein.

Some embodiments of the invention feature a method of scanning beams using at least one array of a plurality of micromirrors, said array installed on a substrate wherein at least some of the plurality of micromirrors in said array are moved away and rotated with respect to the substrate.

According to some specific embodiments the moving away of a micromirror with respect to the substrate comprises a rectilinear or a curvilinear movement. According to some specific embodiments the rotation of a micromirror is around a first axis or around a first axis and a second axis..

According to some specific embodiments all or some of the micromirrors rotate at the same angle.

According to some specific embodiments all or some of the micromirrors piston in an amount which differs from an amount of a piston of at least one other micromirror by an amount fulfilling the condition Δd =Nλ/2, where λ is the wavelength of a light beam used for scanning, and N is an integer number. According to some specific embodiments a plurality of micromirrors piston in the same amount.

According to some specific embodiments the light reflected from a first micromirror interferes with a reflected light so as to form an interfered light in the form of a pattern.

These and further features and advantages of the present invention are described in more detail in the following description as well as in the claims with the aid of the accompanying drawings.

### BRIEF DESCRIPTION OF THE DRAWINGS

Figure 1 a is an exemplary schematic representation of a micromirror array chip;
figure 1b is an exemplary schematic representation of a single array of micromirrors; and figure 1c is an exemplary schematic representation of a single micromirror of the array, according to some embodiments.
Figure 2 is an exemplary schematic representation of a single array of micromirrors where the micromirrors are rotated at a certain angle around an axis according to some embodiments.
Figure 3 is an exemplary schematic representation of a single array of micromirrors where the micromirrors are rotated at a certain angle around an axis different from the axis of figure 2, according to some embodiments.
Figure 4 is an exemplary schematic representation of a single micromirror, moved vertically and rotated at a certain angle around an axis according to some embodiments.

### DETAILED DESCRIPTION

For simplicity of description, herein a rotation of a micromirror around the X axis will be referred to as tip movement or simply tip, and a rotation of the micromirror around the Y axis will be referred to as tilt movement or simply tilt. Therefore the two terms are used only in order to distinguish rotation around two different axes while for the purpose of this description, it is indifferent around which axis each rotation takes place.

Also a movement of a micromirror from a rest position with respect to a supporting body, or substrate, away from the surface of the substrate will be referred to a piston movement, or simply piston.

Due to the high difficulty in engineering relatively large, fast and simultaneously dynamically flat mirrors, the inventors propose to replace the single MEMS mirror scanner by a high fill factor array of micromirrors configured to undergo at list a piston and a tilt movement, as will be described below.

The advantage of this proposal is that each individual micromirror has a much smaller moment of inertia (due to its small size) as compared to the larger single mirrors, and can therefore be positioned much faster to the desired configuration. In order to obtain a performance with limited diffraction, the individual micromirrors may be tilted at the same angle as would be required for a corresponding scanning mirror, but additionally a piston position is preferably chosen such that jumps Δd between micromirrors fulfill the condition Δd =Nλ/2, where λ is the wavelength of the laser, and N is an integer number. This condition allows for positioning of micromirrors relative to each other in such a way that constructive interference may be provided with respect to light beams reflected from selected mirrors. The term "jump" in the context of the present specification is to be understood to mean either upward or downward movement; that is to say, by performing a jump, a mirror may move upward (away from the substrate) relative to another mirror or downward (towards the substrate) relative to that mirror. This condition guarantees that substantially all the light reflected by the individual mirror element is aligned in phase, similarly to the light reflected by a large singular mirror.

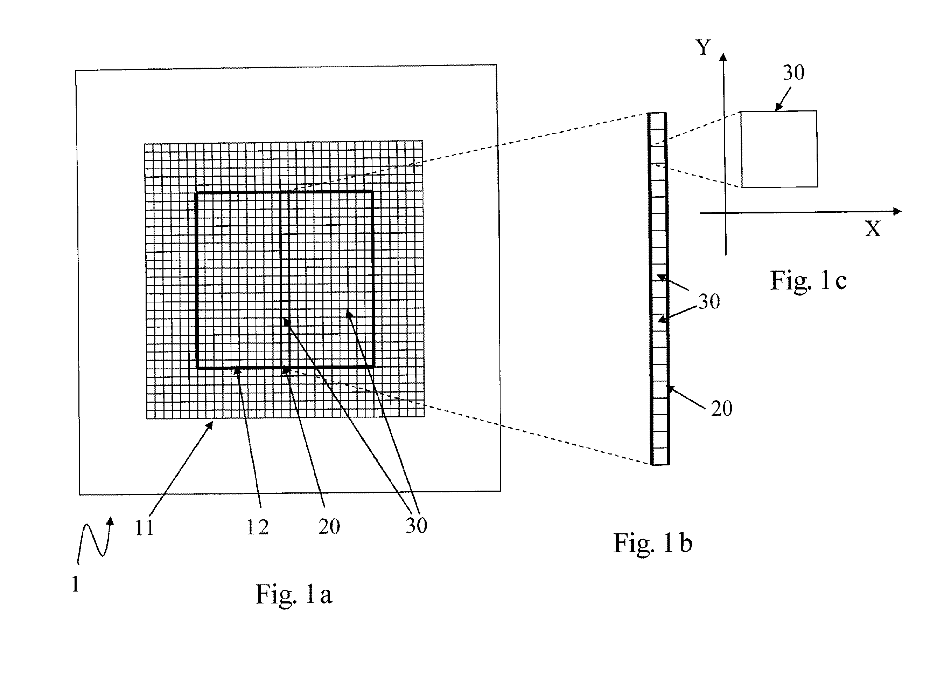

in all the figures described herein, like elements have like reference numerals. Figure 1a is an exemplary schematic representation of a micromirror array chip 1. As shown, the micromirror array chip comprises an area 11 where micromirrors 30 are fabricated. On such a structure, and for example within a certain zone 12 inside the area 11, arrays 20 of micromirrors may be formed. Figure 1b is an exemplary schematic representation of a single array 20 of micromirrors 30. Preferably the micromirrors 30 are installed according to a high fill factor. The term fill factor in the present description refers to the ratio of the area covered by the micromirrors to the total available area on the surface of the array support. In other words, a high fill factor means that most of the available area of the array support is covered by the micromirrors and only very small areas (e.g. between two adjacent micromirrors) are not covered by the micromirrors. Typically a ratio of about 80% and above is considered as a high fill factor.

Figure 1c is an exemplary schematic representation of a single micromirror 30 of the array 20. As shown in this figure, a single micromirror 30 preferably have a planar shape defined by two axes X and Y.

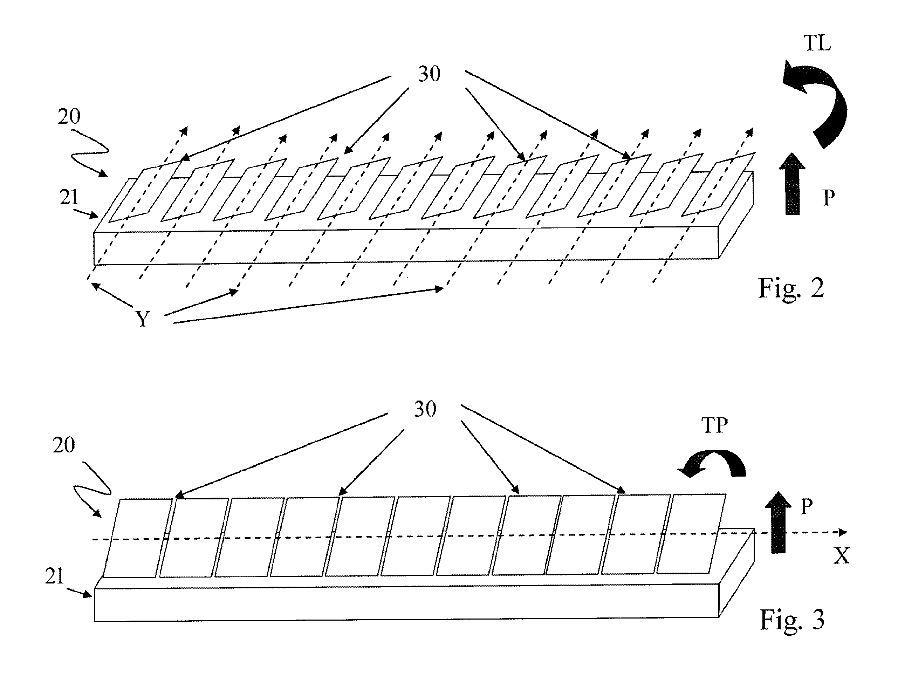

Figure 2 is an exemplary schematic representation of a single array 20 of micromirrors 30 where the micromirrors are rotated at a certain angle a around the Y axis (thus tilted) , according to some embodiments.

Typically the array 20 of micromirrors 30 is located on a support, or substrate 21. Preferably before tilting at the desired angle a, the micromirrors 30 are made to piston (for example vertically upwards) with respect to the substrate 21. This piston movement is shown in the figure by arrow P. Preferably after the piston movement, the micromirrors are titled by an angle α as shown by the arrow TL. In this manner, the micromirrors 30 undergo a piston movement and a tilt movement.

Alternatively, the micromirrors 30 are first tilted and next made to piston. If this is the case, the substrate 21 is designed in such a manner as to allow sufficient space for such tilting in its initial (rest) position.

Figure 3 is an exemplary schematic representation of a single array 20 of micromirrors 30 where the micromirrors are rotated at a certain angle β around the X axis (thus tipped) , according to some embodiments.

Here also it is assumed that the array of micromirrors 30 is initially located on substrate 21. Preferably before being tipped at the desired angle β, the micromirrors 30 undergo a piston movement with respect to the substrate 21 (similar to the piston movement described in relation to figure 2). This piston movement is shown in the figure by arrow P. Preferably after the piston movement, the micromirrors are tipped by an angle β as sown by the arrow TP In this manner, the micromirrors 30 undergo a piston movement and a tip movement.

Alternatively, the micromirrors 30 are first tipped and next made to piston. If this is the case, the substrate 21 is designed in such a manner as to allow sufficient space for such tipping in its initial (rest) position.

It is to be noted that in relation to both figures 2 and 3, although the overall piston movement is shown by one single arrow, the piston movement of the individual micromirrors may or may not be of the same amount. That is to say, each micromirror may undergo a piston movement at a given length (or distance) determined specifically for that particular micromirror for a particular application. Furthermore, while some micromirrors may undergo a piston movement at a certain moment, there may exist other ones that do not undergo any movement at that particular moment.

Preferably, certain neighboring mirrors may piston at respective amounts that differ from each other by Δd (as defined above).

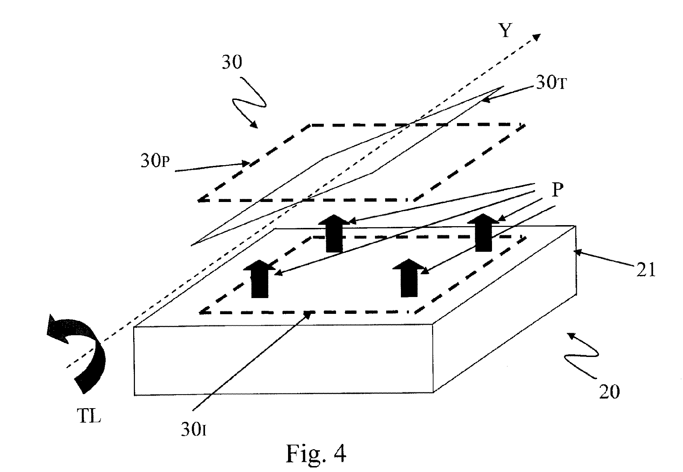

Figure 4 is an exemplary schematic representation of a single micromirror 30 from the array 20, the single micromirror being moved away and rotated at a certain angle α around the Y axis with respect to the substrate 21. ln a preferred embodiment, the single mirror 30 is assumed to be in an initial position 30, where it rests on the substrate 21. In a next step, the micromirror undergoes a piston movement with respect to the substrate 21 to reach a second position 30p. This piston movement is schematically shown in the figure by means of upward arrows P. In a next step, the micromirror is tilted around the Y axis as shown by arrow TL and reaches its final, tilted position 30_{T}.

The piston movement is shown in figure 4 as an upward vertical movement of the micromirror 30 with respect to the substrate. However, this is only one possibility. The piston movement may be in other directions according to specific designs. Furthermore, the piston movement is shown to be performed in a rectilinear manner. This is only one possibility as the piston movement may undergo other types of movement, for example a curvilinear movement according to specific designs.

The order of first performing a piston and next rotate of the micromirror 30 is also only one possibility. Therefore, the micromirror 30 may first be made to rotate and next to move away from the substrate 21. In such case, appropriate space is provided underneath and above the micromirror 30 in order to allow for a suitable rotation. Also in a curvilinear movement, the piston may (due to its curved movement as it carries the micromirror) cause a rotation of the micromirror from its initial angular position to its final angular position (tilted or tipped due to a change in the angle of the micromirror with respect to the substrate as it pistons). An advantage of using an array of micromirrors as opposed to a single scanning mirror, in addition to improving speed, is the fact that the angle accuracy requirements on the micromirrors are greatly relaxed. For example, the typical requirement of about 2 mdeg accuracy for a single mirror may be reduced to a about 100 mdeg requirement for the elements of a micromirror array. The tolerance on the angles is relaxed because, for a smaller element, the same angle error produces a smaller phase error on the optical wave front. In fact the micromirror array may be understood to be similar to an Echelle grating (a known type of high order diffraction grating having a relatively small number of grooves but presenting relatively high diffraction orders where most of the light is diffracted in one particular order) where the micromirror tilt determines in which order th light is diffracted, and fine deflection angle adjustment may be obtained by changing the piston movement value of the individual mirror in a linear fashion across the array (as described above). The piston accuracy for diffraction limited performance may preferably be of the order of λ/50 over a maximum piston range of λ/2. Therefore the total dynamic range for both piston and tilt accuracy can be relaxed from about maximal 14 bit (i.e. one part in 2¹⁴ or 1/16384) as required for the angle accuracy for a single scanning mirror, to less than about 7bit (i.e. one part in 2⁷ or 1/128) for a micromirror array approach.

The piston-tip-tilt movements of the micromirrors may be implemented for example by an electrostatic actuators as driving force, as described for example in the following publications:
- "Advanced MEMS spatial light modulator for communications, imaging and targeting". F. Pardo et al.. Workshop on Solid-State Sensors, Actuators, and Microsystems (Hilton Head Workshop), Transducer Research Foundation, June 4-8, 2006, Hilton Head Island, SC, USA;
- "Characterization of Piston-Tip-Tilt mirror pixels for scalable SLM arrays" F. Pardo et al. International Conference On Optical MEMS and Their Applications, IEEE-LEOS, August 21-24th, 2006, Big Sky Resort, Big Sky, Montana, USA; and
- US Patent number 7,068,409;

In the above examples, the micromirrors may preferably be flat to λ/8 peak-to-valley at typical values of about 410nm wavelength, 120µm in size, fill factor exceeding 98% and having mechanical resonance frequencies of 30KHz for tip, tilt and piston motions (PTT), with near-critical damping at atmospheric pressure. In a preferred embodiment, high-force, dual in-plane deep comb-drive actuators and lightweight, strut-reinforced mirrors fabricated in a 10-lithography-level process are used with sub-micron features and stress-controlled poly-Si structural layers and Si oxide sacrificial layers, for a total material layers stack of about 20 µm. Preferably piston and tilt are generated by upward motion so mechanical clearance is not an issue and the whole area under the mirror can be used for electro-mechanical force generation (comprising the actuators). However, other piston and tilt movements may also be applied, examples of which have been provided further above.

A design made according to the above characteristics may present about ± 4° mechanical tip and tilt and 5µm piston continuous, controllable range, mainly due to the structure of a universal joint used for coupling the high-force actuators to the micromirrors allowing the stable PTT motion.

However, it has been found that tilt angle may be improved by a factor of two by using a piston-tilt-only (PT) mechanism which is preferred in relation to high-speed scanners, while keeping a full settling time of about 100µs.

Extra planarization steps during the reflector fabrication sequence may result in mirror planarity better than about λ/10, which is desirable because it provides for better optical performance.

An alternative approach to actuating every single micromirror independently by various (e.g. 4) electrodes, may be to connect (or "tie") all the micromirrors in a row of an array to form one slat. This alternative approach may be of particular utility in the case of scanner applications for HDS where all micromirrors in a row of the array may piston and rotate by the same amount, such as slats in a blind. A slat in the context of the present description is the array of micromirrors arranged in a substantially parallel configuration such that by all the micromirrors of the slats may be moved simultaneously and with the same tip or tilt angle. The connection may preferably be made both electrically and mechanically by springs under the mirrors. In such a structure the resulting connections may be of the order of twice the number of rows which may result for example in the order of 20 connections needed for a motion uniformity of all mirrors in a slat. This issue may be addressed by a single 32-channel on-board high-voltage digital to analog convertor (DAC) such as for example the commercially available Analog Devices AD5535.

## Claims

1. A beam scanner comprising at least one array of a plurality of micromirrors, said array being installed on a substrate wherein at least some of the plurality of micromirrors in said array are configured to be moved away and rotated with respect to the substrate.

2. The beam scanner of claim 1 wherein a micromirror is configured to move away with respect to the substrate by a rectilinear or in a curvilinear movement.

3. The beam scanner of any one of the claims 1 or 2 wherein the rotation of a micromirror is around a first axis or around a first axis and a second axis.

4. The beam scanner of any one of the previous claims wherein all or some of the micromirrors rotate at the same angle.

5. The beam scanner of any one of the claims wherein all or some of the micromirrors piston in an amount which differs from an amount of a piston of at least one other micromirror by an amount fulfilling the condition Δd=Nλ/2, where λ is the wavelength of a light beam used for scanning, and N is an integer number.

6. The beam scanner of any one of the claims 1 to 4 wherein a plurality of micromirrors are configured to piston in the same amount.

7. A micromirror array chip comprising the beam scanner of any one of the claims scanner of any one of the claims 1 to 6.

8. An optical device comprising the chip of claim 7 or the beam scanner of any one of claims 1 to 6.

9. A method of scanning beams using at least one array of a plurality of micromirrors, said array installed on a substrate wherein at least some of the plurality of micromirrors in said array are moved away and rotated with respect to the substrate.

10. The method of claim 9 wherein moving away of a micromirror with respect to the substrate comprises a rectilinear or a curvilinear movement.

11. The method of any one of the claims 9 or 10 wherein the rotation of a micromirror is around a first axis or around a first axis and a second axis.

12. The method of any one of the claims 9 to 11 wherein all or some of the micromirrors rotate at the same angle.

13. The method of any one of the claims 9 to 12 wherein all or some of the micromirrors piston in an amount which differs from an amount of a piston of at least one other micromirror by an amount fulfilling the condition Δd =Nλ,/2, where λ is the wavelength of a light beam used for scanning, and N is an integer number.

14. The method of any one of the claims 9 to 12 wherein a plurality of micromirrors piston in the same amount.

15. The method of any one of the claims 9 to light reflected from a first micromirror interferes with a reflected light so as to form an interfered light in the form of a pattern.
